# FASCICULE DE BREVET EUROPEEN

(11) **EP 2 814 692 B1**
(45) Date de publication et mention de la délivrance du brevet: **06.04.2016**
(21) Numéro de dépôt: 13701645.7
(22) Date de dépôt: 30.01.2013
(51) Int. Cl.: B60N 3/04, B60N 3/06

(54) **ENSEMBLE POUR LA RECEPTION D'UN TALON D'UN UTILISATEUR D'UN VEHICULE AUTOMOBILE**
ANORDNUNG ZUM AUFNEHMEN DER FERSE EINES BENUTZERS EINES KRAFTFAHRZEUGS
ASSEMBLY FOR RECEIVING THE HEEL OF A USER OF A MOTOR VEHICLE

(30) Priorité: 13.02.2012 FR 1251307
(43) Date de publication de la demande: 24.12.2014
(73) Titulaire: Renault s.a.s., 92100 Boulogne-Billancourt (FR)
(72) Inventeur: BOUILLON, Jean-Charles, 78940 La Queue Lez Yvelines (FR)
(86) Numéro de dépôt international: PCT/EP2013/051769
(87) Numéro de publication internationale: WO 2013/120693

(56) Documents cités:
- EP-A1- 1 093 961
- FR-A1- 2 874 874
- FR-A1- 2 929 565
- US-A1- 2003 222 478

## Description

L'invention concerne un ensemble pour la réception d'un talon d'un utilisateur d'un véhicule automobile sous une pédale et/ou un repose-pied d'un habitacle de véhicule automobile.

L'invention concerne plus particulièrement un ensemble pour la réception d'un talon d'un utilisateur d'un véhicule automobile sous une pédale et/ou un repose-pied d'un habitacle de véhicule automobile, comprenant au moins :
- une épaisseur de feutre acoustique apte à reposer sur un plancher horizontal en tôle de l'habitacle du véhicule,
- un élément de réception, au moins en partie déformable, qui repose sur ledit feutre et qui comporte au moins une partie faisant saillie par rapport à l'horizontale qui constitue une zone d'appui et de pivotement du talon de l'utilisateur,
- un tapis recouvrant ledit élément et le feutre acoustique.

On connaît de nombreux exemples d'ensembles de ce type (voir, par exemple, FR-A-2874874).

Selon une première conception connue, l'élément de réception est constitué d'un bloc de polystyrène, de polypropylène, ou de polyuréthane expansé qui est inséré entre la mousse acoustique et le tapis. La mousse est moulée sur l'élément de réception, ce qui permet d'assurer la cohésion, c'est-à-dire entre la mousse et l'élément de réception.

Cette solution est relativement onéreuse car elle nécessite des opérations de mise en forme de la mousse acoustique sur l'élément de réception et présente un coût important en termes de logistique. Selon une seconde conception connue, l'élément de réception est constitué d'un bloc de polystyrène expansé de grande longueur qui est inséré entre la mousse acoustique et le tapis. La grande longueur de l'élément garantit une grande surface d'adhésion de la mousse sur l'élément de réception.

Cette solution est relativement onéreuse car elle augmente considérablement le coût de l'élément de réception.

L'invention remédie à cet inconvénient en proposant un nouveau concept d'élément intermédiaire pouvant être inséré entre une couche d'absorbant acoustique et un tapis à moindre coût.

Dans ce but, l'invention propose un ensemble du type décrit précédemment, caractérisé en ce que l'élément de réception comprend un boîtier creux reposant sur la couche d'absorbant acoustique, qui est délimité par :
- au moins une paroi transversale arrière rigide, qui fait saillie par rapport à l'horizontale pour constituer la zone d'appui et de pivotement du talon de l'utilisateur,
- au moins une paroi transversale horizontale, comportant une extrémité avant fixée sur le plancher du véhicule, et qui est apte à se déformer en cas de choc pour dissiper l'énergie cinétique du pied de l'utilisateur.

Selon d'autres caractéristiques de l'invention :
- l'élément de réception comporte de surcroît deux parois latérales reliant la paroi arrière à la paroi transversale horizontale, qui sont aptes se déformer en cas de choc pour contribuer à la dissipation de l'énergie cinétique du pied de l'utilisateur,
- la paroi transversale arrière rigide comporte une face externe constituant la zone d'appui et de pivotement du talon de l'utilisateur et une face interne opposée au dos de laquelle s'étend transversalement une pluralité de nervures de rigidification,
- l'extrémité inférieure de la paroi transversale arrière rigide comporte une patte inférieure qui comporte au moins une griffe d'accrochage dans le feutre acoustique,
- la patte inférieure s'étend sensiblement suivant la largeur de la paroi transversale arrière et elle comporte une pluralité de griffes d'accrochage de forme sensiblement coniques destinées à pénétrer le feutre acoustique pour retenir le boîtier creux,
- la paroi transversale arrière rigide s'étend selon une inclinaison déterminée par rapport à l'orientation horizontale du plancher et la patte inférieure s'étend sensiblement parallèlement au plancher,
- l'extrémité avant de la paroi transversale horizontale comporte une patte avant qui est traversée par un perçage apte à recevoir un élément d'immobilisation axiale de la patte sur le plancher,
- l'élément d'immobilisation comprend un pion qui est soudé au plancher du véhicule,
- le plancher du véhicule s'étend selon une inclinaison déterminée au voisinage de l'extrémité avant de la paroi transversale horizontale et la patte avant s'étend sensiblement parallèlement audit plancher.

D'autres caractéristiques et avantages de l'invention apparaîtront à la lecture de la description détaillée qui suit pour la compréhension de laquelle on se reportera aux dessins annexés parmi lesquels :
- la figure 1 est une vue d'ensemble en perspective d'une partie inférieure d'un habitacle de véhicule automobile,
- la figure 2 est une vue schématique en coupe d'un ensemble selon un premier état de la technique,
- la figure 3 est une vue schématique en coupe d'un ensemble selon un second état de la technique,
- la figure 4 est une vue schématique en coupe d'une variante d'ensemble non fonctionnelle,
- la figure 5 est une vue schématique en coupe d'un ensemble selon l'invention en position de repos,
- la figure 6 est une vue schématique en perspective de l'ensemble selon l'invention en position de repos,
- la figure 7 est une vue schématique en coupe de l'ensemble selon l'invention en position de sollicitation lors d'un choc.

Dans la description qui va suivre, des numéros de référence identiques désignent des pièces identiques ou ayant des fonctions similaires.

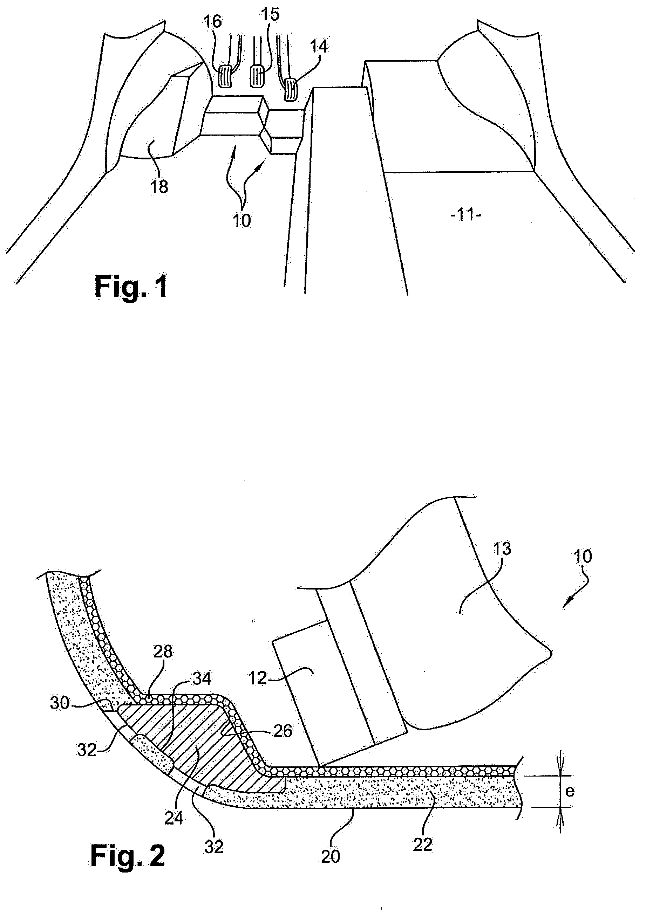

On a représenté sur les figures 2 à 5 et 7 un ensemble 10 pour la réception d'un talon 12 d'un utilisateur d'un véhicule. Comme l'illustre la figure 1 un tel ensemble 10 est destiné à être disposé dans une partie inférieure 11 d'un habitacle de véhicule automobile sous une pédale d'accélérateur 14, de frein 15 ou d'embrayage 16 ou encore devant un repose-pied 18 d'un habitacle de véhicule automobile.

De manière connue, comme l'illustre la figure 2, un tel ensemble 10 comprend du bas vers le haut au moins une épaisseur "e" de mousse acoustique 22 apte à reposer sur un plancher horizontal 20 en tôle de l'habitacle du véhicule, puis un élément 24 de réception, au moins en partie déformable, qui est inséré dans ladite mousse 22 et qui comporte au moins une partie 26 faisant saillie par rapport à l'horizontale, qui constitue une zone d'appui et de pivotement du talon 12 d'un pied 13 de l'utilisateur, et enfin un tapis 28 recouvrant ledit élément 24 et la mousse acoustique 22.

Conventionnellement, l'élément 24 de réception est constitué d'un bloc de polystyrène, ou de polyuréthane ou de polypropylène expansé qui est inséré entre la mousse acoustique 22 et le tapis 28. L'élément de réception 24 tient par cohésion entre la mousse 22 et l'élément 24. Cette cohésion est obtenue lors de l'injection de la mousse autour de l'élément de réception 24 pour un maximum d'efficacité l'élément de réception 24 a besoin de prendre des appuis sur la tôle dès le début du choc. Donc dans les zones 32, il est nécessaire de laisser 3 mm d'air pour améliorer l'efficacité.

Cette solution est relativement onéreuse car elle nécessite des opérations de moulage particulier de la mousse acoustique 22 sur l'élément 24 de réception.

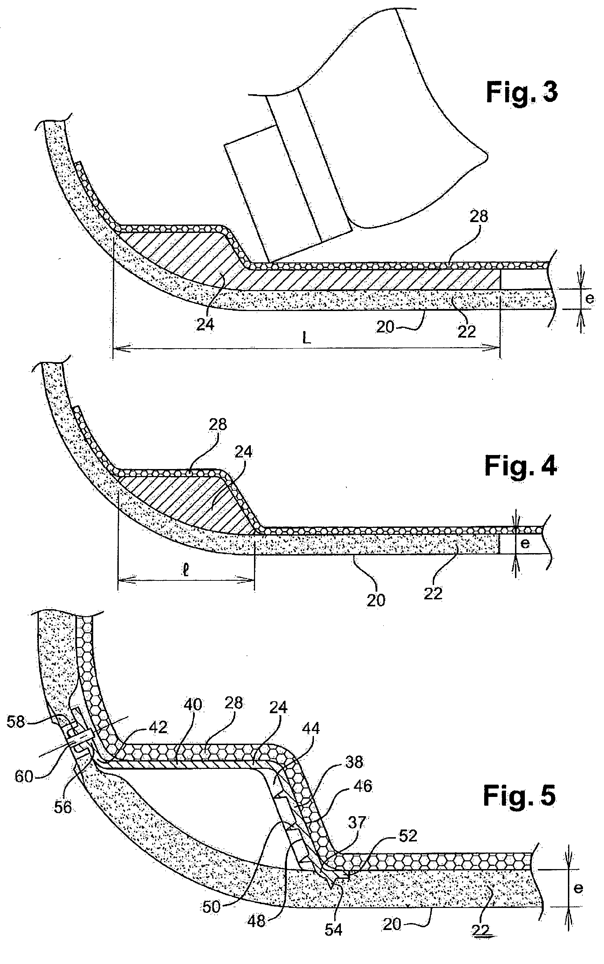

Selon une seconde conception connue, qui a été représentée à la figure 3, l'élément de réception 24 est constitué d'un bloc 24 de polystyrène expansé de grande longueur "L" qui est simplement posé sur un feutre acoustique 22. Le tapis 28 est ensuite posé dessus en usine. La grande longueur "L" de l'élément 24 garantit sa stabilité en cas de choc par appui sur de nombreux points des fonds de cave 11.

Cette solution est relativement onéreuse car elle augmente considérablement le coût de l'élément 24 de réception.

Lorsque l'on souhaite réduire le coût de fabrication d'un tel ensemble, on pense naturellement, comme l'illustre la figure 4 à réduire la longueur de l'élément 24 à une longueur réduite "I". Cette conception n'est pas réalisable car un élément 24 de longueur "I" trop courte serait entraîné en glissement par le talon 12 du conducteur entre le feutre acoustique 22 et le tapis 28. De plus, la hauteur disponible entre le tapis 28 et la tôle 22 ne le permet pas toujours.

L'invention remédie à cet inconvénient en proposant un ensemble comportant une nouvelle conception de l'élément 24 de réception.

Conformément à l'invention, comme représenté à la figure 5, l'élément de réception 24 est constitué d'un boîtier 24 creux reposant sur une couche acoustique 22 de type mousse, qui est delimité par :
- au moins une paroi 38 transversale arrière rigide, qui fait saillie par rapport à l'horizontale pour constituer la zone d'appui et de pivotement du talon 12 de l'utilisateur,
- au moins une paroi 40 transversale horizontale, comportant une extrémité avant 42 fixée sur le plancher 20 du véhicule, et qui est apte à se déformer en cas de choc pour dissiper l'énergie cinétique du pied 13 de l'utilisateur.

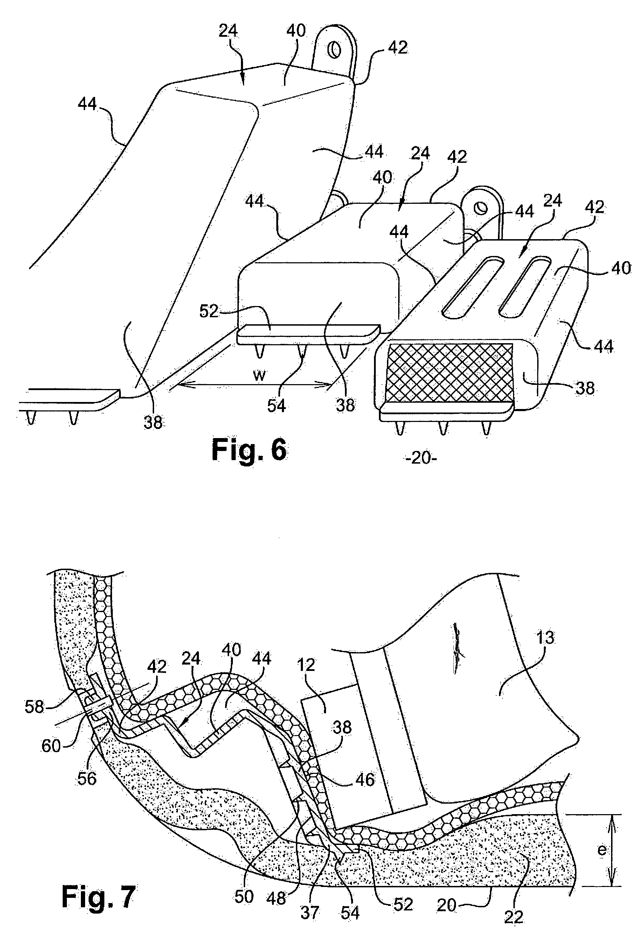

De préférence, comme l'illustre la figure 6, l'élément 24 de réception comporte de surcroît deux parois latérales 44 reliant la paroi arrière 38 à la paroi 40 transversale horizontale, qui sont aptes à se déformer en cas de choc pour contribuer à la dissipation de l'énergie cinétique du pied 13 de l'utilisateur.

Ainsi, en cas de choc comme représenté à la figure 7, le pied 13 de l'utilisateur sollicite l'élément 24 par l'intermédiaire de son talon 12 et l'énergie cinétique qui est transmise au pied 13 est transmise aux parois 40, 44 par la paroi arrière rigide 38, puis dispersée par la déformation des parois 40, 44, ce qui permet d'éviter les risques de lésions.

Avantageusement, la paroi transversale arrière rigide 38 comporte une face externe 46 constituant la zone d'appui et de pivotement du talon 12 de l'utilisateur et une face interne 48 opposée au dos de laquelle s'étend transversalement une pluralité de nervures 50 de rigidification.

Pour ancrer l'élément 24 dans la couche acoustique 22, une extrémité inférieure 37 de la paroi transversale arrière rigide 38 comporte une patte inférieure 52 qui comporte au moins une griffe 54 d'accrochage dans la mousse acoustique.

De préférence, comme l'illustre la figure 6, cette patte inférieure 52 s'étend sensiblement suivant la largeur "w" de la paroi transversale arrière 38 et elle comporte une pluralité de griffes 54 d'accrochage de forme sensiblement coniques destinées à pénétrer la mousse acoustique 22 pour retenir le boîtier creux 24.

La paroi transversale arrière rigide 38 s'étendant de préférence selon une inclinaison déterminée par rapport à la direction horizontale du plancher 20, la patte inférieure 52 s'étend sensiblement à l'horizontale parallèlement au plancher 20.

Par ailleurs, pour permettre l'écrasement des parois 40, 44, il est nécessaire de lier l'élément 24 au plancher 20 du véhicule. A cet effet, l'extrémité avant 42 de la paroi transversale horizontale 40 comporte une patte avant 56 qui est traversée par un perçage 58 apte à recevoir un élément 60 d'immobilisation axiale de la patte 56 sur le plancher 20.

De préférence, cet élément 60 d'immobilisation comprend ici un pion 60 qui est soudé au plancher du véhicule. Ce mode de réalisation n'est pas limitatif de l'invention, et le plancher 20 pourrait recevoir un écrou prisonnier qui recevrait une vis traversant le perçage 58 de la patte 56. Le plancher 20 pourrait également recevoir un pion sapin ou une agrafe.

On remarquera que dans cette zone le plancher 20 du véhicule s'étend selon une inclinaison déterminée au voisinage de l'extrémité avant de la paroi transversale horizontale 40. La patte 56 avant s'étend sensiblement parallèlement audit plancher 20 incliné.

Un tel ensemble est d'un coût particulièrement avantageux, car la structure en boîtier de l'élément 24 est peu onéreuse et ne nécessite pas de découpe particulière de la mousse acoustique 22. L'invention trouve donc naturellement à s'appliquer à des véhicules d'entrée de gamme pour lesquels les coûts de production doivent être extrêmement contrôlés.

De plus, la gestion des caractéristiques chocs est plus précise et la conception plus flexible.

## Revendications

1. Ensemble (10) pour la réception d'un talon (12) d'un utilisateur d'un véhicule automobile sous une pédale (14, 15, 16) et/ou un repose-pied (18) d'un habitacle de véhicule automobile, comprenant au moins :
- une épaisseur (e) d'une couche acoustique (22) apte à reposer sur un plancher (20) horizontal en tôle de l'habitacle du véhicule,
- un élément (24) de réception, au moins en partie déformable, qui repose sur ladite couche acoustique (22) et qui comporte au moins une partie (26) faisant saillie par rapport à l'horizontale qui constitue une zone d'appui et de pivotement du talon (12) de l'utilisateur,
- un tapis (28) recouvrant ledit élément et la couche acoustique,
**caractérisé en ce que** l'élément de réception est constitué d'un boîtier creux (24) reposant sur la couche acoustique (22), qui est délimité par :
- au moins une paroi (38) transversale arrière rigide, qui fait saillie par rapport à l'horizontale pour constituer la zone d'appui et de pivotement du talon (12) de l'utilisateur,
- au moins une paroi transversale horizontale (40), comportant une extrémité avant (42) fixable sur le plancher (20) du véhicule, et qui est apte à se déformer en cas de choc pour dissiper l'énergie cinétique du pied (13) de l'utilisateur.

2. Ensemble (10) selon la revendication 1, **caractérisé en ce que** l'élément (24) de réception comporte de surcroît deux parois latérales (44) reliant la paroi arrière (38) à la paroi transversale horizontale (44), qui sont aptes se déformer en cas de choc pour contribuer à la dissipation de l'énergie cinétique du pied (13) de l'utilisateur.

3. Ensemble (10) selon l'une des revendications 1 ou 2, **caractérisé en ce que** la paroi transversale arrière rigide (38) comporte une face externe (46) constituant la zone d'appui et de pivotement du talon (12) de l'utilisateur et une face interne opposée (48) au dos de laquelle s'étendent transversalement une pluralité de nervures (50) de rigidification.

4. Ensemble (10) selon la revendication 3, **caractérisé en ce qu'**une extrémité inférieure (37) de la paroi transversale arrière rigide comporte une patte inférieure (52) qui comporte au moins une griffe (54) d'accrochage dans la couche acoustique (22).

5. Ensemble (10) selon la revendication 4, **caractérisé en ce que** la patte inférieure (52) s'étend sensiblement suivant la largeur (w) de la paroi (38) transversale arrière et **en ce qu'**elle comporte une pluralité de griffes (54) d'accrochage de forme sensiblement coniques destinées à pénétrer le feutre acoustique (22) pour retenir le boîtier creux (24).

6. Ensemble (10) selon les revendications 4 ou 5, **caractérisé en ce que** la paroi transversale arrière rigide (38) s'étend selon une inclinaison déterminée par rapport à l'orientation horizontale du plancher (20) et **en ce que** la patte inférieure (52) s'étend sensiblement parallèlement au plancher (20).

7. Ensemble (10) selon l'une des revendications 1 à 6, **caractérisé en ce que** l'extrémité avant (42) de la paroi transversale horizontale (40) comporte une patte avant (56) qui est traversée par un perçage (58) apte à recevoir un élément d'immobilisation axiale de la patte (56) sur le plancher (20).

8. Ensemble (10) selon la revendication 6, **caractérisé en ce que** l'élément d'immobilisation comprend un pion (60) qui est soudé au plancher (20) du véhicule.

9. Ensemble selon les revendications 7 ou 8, **caractérisé en ce que** le plancher (20) du véhicule s'étend selon une inclinaison déterminée au voisinage de l'extrémité avant (42) de la paroi transversale horizontale (40) et **en ce que** la patte avant (42) s'étend sensiblement parallèlement audit plancher (20).

## Patentansprüche

1. Anordnung (10) zur Aufnahme einer Ferse (12) eines Benutzers eines Kraftfahrzeugs unter einem Pedal (14, 15, 16) und/oder einer Fußablage (18) eines Kraftfahrzeuginnenraums, umfassend mindestens
- eine Dicke (e) einer Akustikschicht (22), die geeignet ist, auf einem horizontalen Boden (20) aus Blech des Fahrzeuginnenraums zu liegen,
- ein Aufnahmeelement (24), das mindestens teilweise deformierbar ist, auf der Akustikschicht (22) liegt und mindestens ein Teil (26) umfasst, das bezüglich der Horizontalen vorragt und einen Stütz- und Schwenkbereich der Ferse (12) des Benutzers darstellt,
- eine das Element und die Akustikschicht abdeckende Matte (28),
**dadurch gekennzeichnet, dass** das Aufnahmeelement aus einem auf der Akustikschicht (22) liegenden hohlen Gehäuse (24) besteht, das durch
- mindestens eine starre hintere Querwand (38), die bezüglich der Horizontalen vorragt, um den Stütz- und Schwenkbereich der Ferse (12) des Benutzers zu bilden,
- mindestens eine horizontale Querwand (40), die ein vorderes Ende (42) umfasst, das am Boden (20) des Fahrzeugs festlegbar ist, und geeignet ist, sich im Falle eines Aufpralls zu deformieren, um die kinetische Energie des Fußes (13) des Benutzers abzuführen, begrenzt ist.

2. Anordnung (10) nach Anspruch 1, **dadurch gekennzeichnet, dass** das Aufnahmeelement (24) darüber hinaus zwei Seitenwände (44) umfasst, die die hintere Wand (38) mit der horizontalen Querwand (44) verbinden und geeignet sind, sich im Falle eines Aufpralls zu deformieren, um zur Abführung der kinetischen Energie des Fußes (13) des Benutzers beizutragen.

3. Anordnung (10) nach einem der Ansprüche 1 oder 2, **dadurch gekennzeichnet, dass** die starre hintere Querwand (38) eine äußere Fläche (46), die den Stütz- und Schwenkbereich der Ferse (12) des Benutzers darstellt, und eine gegenüberliegende innere Fläche (48) umfasst, an deren Rückseite sich eine Vielzahl von Versteifungsrippen (50) quer erstrecken.

4. Anordnung (10) nach Anspruch 3, **dadurch gekennzeichnet, dass** ein unteres Ende (37) der starren hinteren Querwand eine untere Lasche (52) umfasst, die mindestens eine Kralle (54) zum Eingriff in die Akustikschicht (22) umfasst.

5. Anordnung (10) nach Anspruch 4, **dadurch gekennzeichnet, dass** sich die untere Lasche (52) im Wesentlichen entlang der Breite (w) der hinteren Querwand (38) erstreckt und dass sie eine Vielzahl von im Wesentlichen konischen Eingriffskrallen (54) umfasst, die dazu bestimmt sind, zum Halten des hohlen Gehäuses (24) in das Akustikvlies (22) einzudringen.

6. Anordnung (10) nach Ansprüchen 4 oder 5, **dadurch gekennzeichnet, dass** sich die starre hintere Querwand (38) gemäß einer bestimmten Neigung bezüglich der horizontalen Ausrichtung des Bodens (20) erstreckt und dass sich die untere Lasche (52) im Wesentlichen parallel zum Boden (20) erstreckt.

7. Anordnung (10) nach einem der Ansprüche 1 bis 6, **dadurch gekennzeichnet, dass** das vordere Ende (42) der horizontalen Querwand (40) eine vordere Lasche (56) umfasst, durch die eine Bohrung (58) geht, die zur Aufnahme eines Elements zur axialen Immobilisierung der Lasche (56) am Boden (20) geeignet ist.

8. Anordnung (10) nach Anspruch 6, **dadurch gekennzeichnet, dass** das Immobilisierungselement einen Zapfen (60) umfasst, der an den Boden (20) des Fahrzeugs geschweißt ist.

9. Anordnung nach den Ansprüchen 7 oder 8, **dadurch gekennzeichnet, dass** sich der Boden (20) des Fahrzeugs gemäß einer bestimmten Neigung in der Nähe des vorderen Endes (42) der horizontalen Querwand (40) erstreckt und dass sich die vordere Lasche (42) im Wesentlichen parallel zum Boden (20) erstreckt.

## Claims

1. Assembly (10) for receiving the heel (12) of a user of a motor vehicle below a pedal (14, 15, 16) and/or a footrest (18) of the passenger compartment of a motor vehicle, comprising at least:
- a thickness (e) of an acoustic layer (22) which is able to rest on a horizontal floor (20), made of sheet metal, of the passenger compartment of the vehicle,
- an at least partially deformable receiving element (24) which rests on said acoustic layer (22) and which comprises at least one portion (26) which projects with respect to the horizontal and which forms a region on which the heel (12) of the user can press and pivot,
- a carpet (28) covering said element and the acoustic layer,
**characterized in that** the receiving element consists of a hollow casing (24) which rests on the acoustic layer (22) and which is delimited by:
- at least one rigid rear transverse wall (38) which projects with respect to the horizontal so as to form the region on which the heel (12) of the user can press and pivot,
- at least one horizontal transverse wall (40), comprising a front end (42) which can be attached to the floor (20) of the vehicle, and which is designed to deform in the event of an impact so as to dissipate the kinetic energy of the foot (13) of the user.

2. Assembly (10) according to Claim 1, **characterized in that** the receiving element (24) comprises, in addition, two side walls (44) connecting the rear wall (38) and the horizontal transverse wall (44), which are designed to deform in the event of an impact so as to help dissipate the kinetic energy of the foot (13) of the user.

3. Assembly (10) according to either of Claims 1 and 2, **characterized in that** the rigid rear transverse wall (38) comprises an outer face (46) which forms the region on which the heel (12) of the user can press and pivot and an opposite inner face (48) on the back of which there extend, transversely, a plurality of stiffening ribs (50).

4. Assembly (10) according to Claim 3, **characterized in that** a lower end (37) of the rigid rear transverse wall comprises a lower tab (52) which comprises at least one claw (54) for gripping in its acoustic layer (22) .

5. Assembly (10) according to Claim 4, **characterized in that** the lower tab (52) extends substantially along the width (w) of the rear transverse wall (38) and **in that** it comprises a plurality of gripping claws (54) of substantially conical shape which are designed to penetrate into the acoustic felt (22) so as to hold the hollow casing (24).

6. Assembly (10) according to Claims 4 or 5, **characterized in that** the rigid rear transverse wall (38) extends with an inclination determined with respect to the horizontal orientation of the floor (20) and **in that** the lower tab (52) extends substantially parallel to the floor (20).

7. Assembly (10) according to one of Claims 1 to 6, **characterized in that** the front end (42) of the horizontal transverse wall (40) comprises a front tab (56) through which there passes a hole (58) which is designed to receive an element for the axial immobilization of the tab (56) on the floor (20).

8. Assembly (10) according to Claim 6, **characterized in that** the immobilizing element comprises a stud (60) which is welded to the floor (20) of the vehicle.

9. Assembly according to Claims 7 or 8, **characterized in that** the floor (20) of the vehicle extends with an inclination determined close to the front end (42) of the horizontal transverse wall (40) and **in that** the front tab (42) extends substantially parallel to said floor (20).
